(19) Europäisches Patentamt
European Patent Office
Office européen des brevets

(11) **EP 1 371 160 B1**

(12) **EUROPEAN PATENT SPECIFICATION**

(45) Date of publication and mention
of the grant of the patent:
**27.08.2008 Bulletin 2008/35**

(51) Int Cl.:
**H04B 17/00** [(2006.01)]

(21) Application number: **02701317.6**

(22) Date of filing: **26.02.2002**

(86) International application number:
**PCT/FI2002/000157**

(87) International publication number:
**WO 2002/069531 (06.09.2002 Gazette 2002/36)**

(54) **METHOD OF PERFORMING CHANNEL SIMULATION, AND CHANNEL SIMULATOR**

VERFAHREN ZUR DURCHFÜHRUNG EINER KANALSIMULATION UND KANALSIMULATOR

PROCEDE PERMETTANT D'EFFECTUER UNE SIMULATION DE CANAL ET SIMULATEUR DE CANAL

(84) Designated Contracting States:
**AT BE CH CY DE DK ES FI FR GB GR IE IT LI LU MC NL PT SE TR**

(30) Priority: **27.02.2001 FI 20010392**

(43) Date of publication of application:
**17.12.2003 Bulletin 2003/51**

(73) Proprietor: **Elektrobit System Test OY**
**90460 Oulunsalo (FI)**

(72) Inventors:
• **JÄMSÄ, Tommi**
**FIN-90550 Oulu (FI)**

• **MEINILÄ, Juha**
**FIN-70260 Kuopio (FI)**

(74) Representative: **Karppinen, Olavi Arto**
**Kolster Oy Ab,**
**P.O. Box 148,**
**Iso Roobertinkatu 23**
**00121 Helsinki (FI)**

(56) References cited:
**EP-A1- 1 075 093**          **US-A- 5 191 594**
**US-A- 6 058 261**

**Description**

FIELD OF THE INVENTION

The invention relates to a radio channel simulator for simulating a radio channel.

BACKGROUND OF THE INVENTION

When a radio frequency signal is transmitted from a transmitter to a receiver, the signal propagates in a radio channel along one or more paths having different signal phases and amplitudes, which causes fadings of different duration and strength in the signal. In addition, noise and interference caused by other transmitters interfere with the radio connection.

A transmitter and a receiver can be tested either in real circumstances or by using a radio channel simulator simulating real circumstances. Tests performed in real circumstances are cumbersome, since tests carried out outdoors, for example, are subject to uncontrollable phenomena, such as the weather and the time of the year, which change continuously. In addition, a test carried out in one environment (city A) is not totally valid in a second, corresponding environment (city B). The worst possible situation cannot either generally be tested in real circumstances.

However, a device simulating a radio channel can be used very freely to simulate a radio channel of the desired kind. In a digital radio channel simulator, a channel is usually modelled with a FIR filter (Finite Impulse Response filter), which generates convolution between the channel model and an applied signal by weighting the signal, delayed by different delays, with channel coefficients, i.e. tap coefficients, and by summing the weighted signal components. The channel coefficients are modified to correspond to the behaviour of a real channel. Patent publication US-A-5191594 discloses a fading channel simulator. A patent publication EP 1075093 presents a method and an apparatus for multi-user transmission.

However, the problem in devices simulating a radio channel is that the present component technology is incapable of producing a real-time, accurate and broadband simulator, neither analog nor digital. For instance down-mixing and up-mixing set high requirements on components in broadband simulation. In a digital simulator, the behaviour of a broadband signal in a channel cannot be simultaneously simulated fast and accurately, since the transformation accuracy is a function of the bandwidth such that the transformation accuracy deteriorates as the band widens. On the other hand, increasingly more accuracy is required of radio channel simulation.

BRIEF DESCRIPTION OF THE INVENTION

The object of the invention is thus to provide an improved channel simulation method and a channel simulator implementing the channel simulation method for performing accurate and fast channel simulation. This is achieved by a method of performing channel simulation on a radio frequency signal in wireless data transfer. The method comprises dividing the total band reserved for the signal to be applied to channel simulation into at least two sub-bands; performing channel simulation on signals corresponding to each sub-band; and combining the signals simulated in different sub-bands to form a total band signal after channel simulation.

The invention also relates to a channel simulator for performing channel simulation on a radio frequency signal used in wireless data transfer. The channel simulator is arranged to divide the total band reserved for the signal to be applied to channel simulation into at least two sub-bands; and the channel simulator comprises at least two channel simulator units for performing channel simulation on signals corresponding to each sub-band; and a combiner for combining the signals simulated in different sub-bands to form a total band signal after channel simulation.

The preferred embodiments of the invention are disclosed in the dependent claims.

The invention is based on dividing the frequency band to be simulated into at least two sub-bands, and channel simulating the signals corresponding to each sub-band separately.

The method and system of the invention provide several advantages. A radio channel can be simultaneously simulated both accurately and fast, since the total band reserved for a signal is divided into sub-bands and each sub-band can be simulated with the best possible accuracy of the channel simulator.

BRIEF DESCRIPTION OF THE FIGURES

In the following, the invention will be described in detail in connection with preferred embodiments with reference to the accompanying drawings, in which

Figure 1A is a block diagram of a channel simulator,
Figure 1B is a block diagram of a channel simulator,

Figure 1C is a block diagram of a channel simulator,
Figure 2 shows a FIR filter,
Figure 3 shows a channel simulator based on convolution transformation, and
Figure 4 shows sub-bands and the combination of sub-bands.

DETAILED DESCRIPTION OF THE INVENTION

The solution presented is particularly well usable for the channel simulation of a broadband radio frequency signal (RF signal). Examples of suitable applications include for instance WLAN (Wireless Local Area Network), wireless mobile communication systems using frequency hopping, and other second, third and fourth generation mobile communication systems, without, however, any restriction thereto.

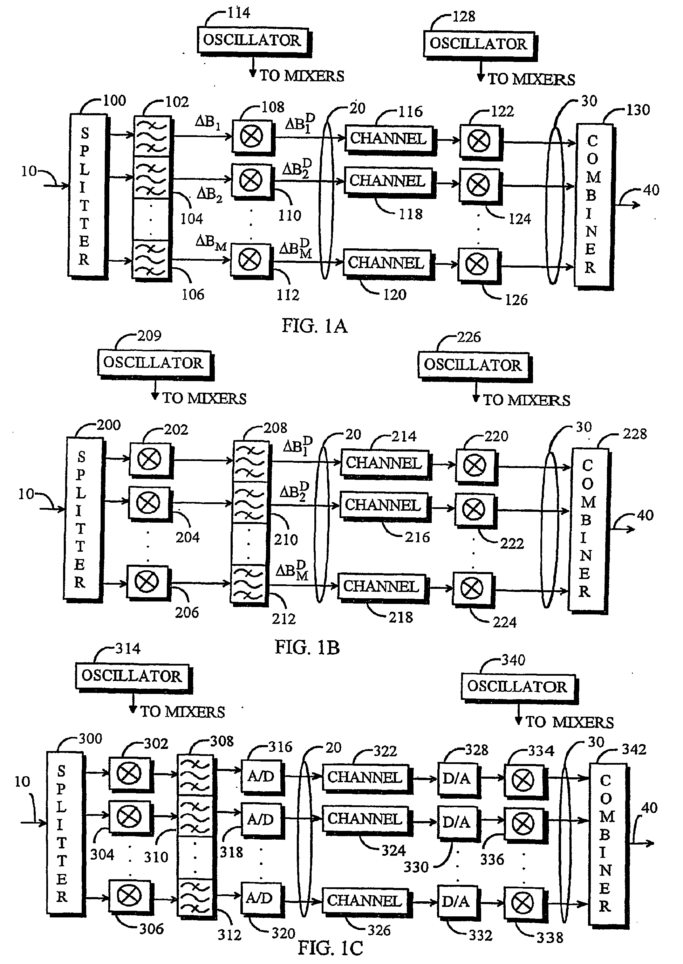

Figure 1A shows a radio channel simulator for wireless data transfer according to the solution presented. An RF signal arriving at the radio channel simulator may be digital or, as is more common, analog. A frequency band B, reserved for the broadband signal, is for instance tens of megahertz, although the solution presented is not limited to the width of the frequency band. In a divider 100, the RF signal is divided into M signals of the original kind, where M is equal to or greater than two. Each divided signal is band-pass filtered in band-pass filters 102 to 106 into sub-bands $\Delta B_1 \dots \Delta B_M$ in such a way that the sum of the sub-bands is the total band B of the RF signal, i.e. $B = \Delta B_1 + \dots + \Delta B_M$. The bandwidth of each sub-band may be equal or different. The frequency of sub-bands $\Delta B_1, \dots \Delta B_M$ is reduced in mixers 108 to 112 for instance by multiplying the signal of each sub-band by the signal of a local oscillator 114 and by low-pass or band-pass filtering the input signal, whereby sub-bands $\Delta B_1^D \dots \Delta B_M^D$ having lowered frequencies are generated. The signal of a local oscillator 114 arriving at each mixer 108 to 112 may be at the same or a different frequency. When a local oscillator 114 signal at a different frequency is used in the different mixers 108 to 112, the intermediate frequency of the sub-bands $\Delta B_1^D \dots \Delta B_M^D$ having lowered frequencies can be set to be the same, allowing all sub-bands to be simulated with the same accuracy if all sub-bands have the same bandwidth. The sub-bands $\Delta B_1^D \dots \Delta B_M^D$ having lowered frequencies each propagate to different channel simulator units 116 to 120, the number of units being M. After the channel simulation performed by the channel simulator units 116 to 120, the signals of the sub-bands are returned to the original RF frequencies by multiplying the signals in mixers 122 to 126 by signals coming from a local oscillator 128, and by high-pass or band-pass filtering the input signal. The RF frequency signals of the sub-bands are combined in a combiner 130 to form a broadband total band.

Figure 1B shows another manner of implementing the division into sub-bands. In this solution, the frequency band B of a broadband RF signal is divided in a divider 200 into M bands. Each one of the M bands have the same bandwidth as the original frequency band. The divided RF signal is multiplied in mixers 202 to 206 by the signal of a local oscillator 209. The signal of the local oscillator 209 arriving at each mixer 202 to 206 may be at the same or a different frequency. The signal, mixed in band-pass filters 208 to 212, is band-pass filtered into sub-bands $\Delta B_1^D \dots \Delta B_M^D$, which correspond to the sub-bands of Figure 1A. The sub-bands $\Delta B_1^D \dots \Delta B_M^D$ having lowered frequencies each propagate to different channel simulator units 214 to 218, the number of units being M. As regards the solution presented, it is essential that in both Figure 1A and Figure 1B, the frequency band of the signal to be applied to the channel simulator units is divided into at least two sub-bands to perform channel simulation in at least two parallel channel simulations. Thereafter, the channel simulation operates in the same way as in the case of Figure 1A. After the channel simulation performed by the channel simulator units 214 to 218, the signals of the sub-bands are returned to the original RF frequencies by multiplying the signals in mixers 220 to 224 by signals coming from a local oscillator 226, and by high-pass or band-pass filtering the input signal. The RF frequency signals of the sub-bands are combined in a combiner 228 to form a broadband total band.

Figure 1C shows a radio channel simulator according to Figure 1B, at which an analog RF signal arrives. In a divider 300, the RF signal is divided into M signals of the original kind. The divided RF signal is multiplied in mixers 302 to 306 by the signal of a local oscillator 314. The signal of the local oscillator 314 arriving at each mixer 302 to 306 may be at the same or a different frequency. The signal, mixed in band-pass filters 308 to 312, is band-pass filtered into sub-bands $\Delta B_1^D \dots \Delta B_M^D$. The analog sub-bands $\Delta B_1^D \dots \Delta B_M^D$ are transformed into digital in analog-to-digital transformers 316 to 320 (A/D transformer). The digital sub-bands $\Delta B_1^D \dots \Delta B_M^D$ each propagate to different channel simulator units 322 to 326, the number of units being M. After the channel simulation performed by the channel simulator units 322 to 326, the sub-bands are transformed back to analog in digital-to-analog transformers 328 to 332 (D/A transformer). The analog sub-bands are returned to the original RF frequencies by multiplying the sub-bands in mixers 334 to 338 by signals coming from a local oscillator 340, and by high-pass or band-pass filtering the input signal. The RF frequency signals of the sub-bands are combined in a combiner 342 to form a broadband total band.

In Figure 1C, the order of the mixers 302 to 306 and the band-pass filters 308 to 312 may also be similar to that in Figure 1A, i.e. the mixing takes place before the band-pass filtering.

In different channel simulator units, the radio channel model may be the same or different, but each channel simulator unit can be used to perform the channel simulation independently. Having the same channel model in all channel simulator units corresponds to a situation where only one channel simulator unit is available. Particularly if the total band to be simulated is broad, the channel may so different in different sub-bands that a different channel model is required for the different sub-bands. The advantage of the solution presented is that the simulation can be performed more accurately than by the use of only one channel simulator unit. In digital channel simulation, the accuracy can be seen in that, compared with one channel simulator, the solution presented has at least a double number of samples available for the same total band. This enables more accurate modelling of the radio channel. The channel simulator can also be used to compensate for amplification and phase errors occurred for instance in mixing and in analog-to-digital transformation.

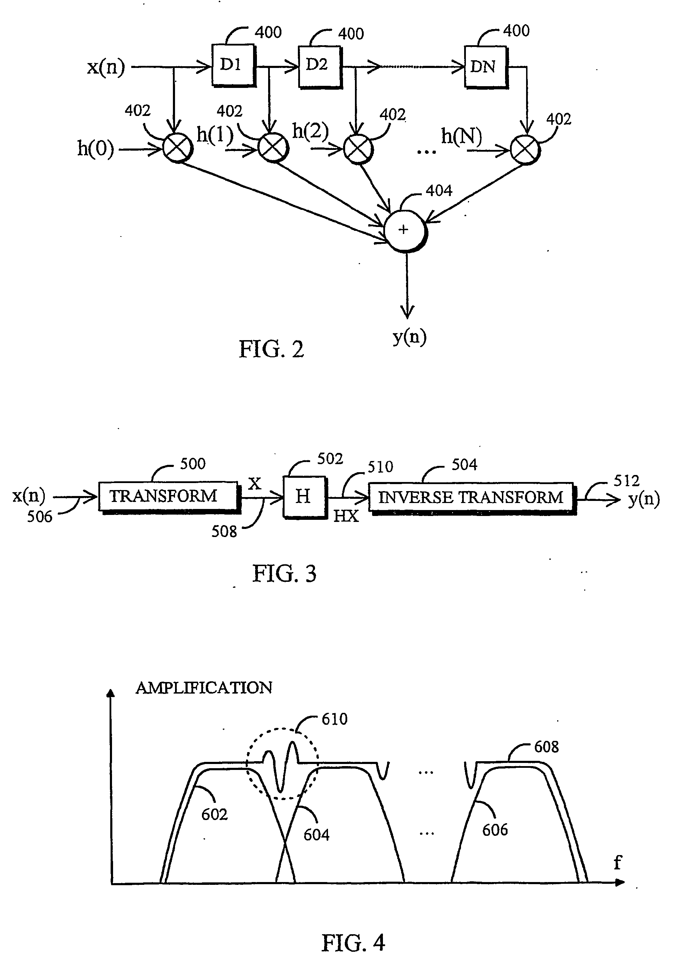

In each channel simulator, a radio channel can be simulated for instance by means of a digital FIR filter, whose block diagram is shown in Figure 2. The FIR filter comprises delay elements 400 arranged as a shift register, weight coefficient blocks 402 and a summer 404. An input signal x(n) is delayed in each delay element 400, whose delays may have the same or different length in time, and the delayed signals are weighted in the weight coefficient blocks 402 by the desired weight coefficient h(i), where i =[0, ..., N]. The weight coefficients h = [h(0), ..., h(N)] are channel estimates of the radio channel, also called tap coefficients of the FIR filter. The weight coefficients are changed in the same way as the characteristics of a real radio channel are thought to change. Usually weight coefficients are quite stable in the short run, but change slowly compared with the variation rate of the signal. The delayed and weighted signals are summed in a summer 404.

Generally, weight coefficients may be real or complex. Complex weight coefficients are needed since for instance a radio channel of the GSM (Global System for Mobile communication) or CDMA radio system (Code Division Multiple Access) uses quadrature modulation, wherein a signal is divided into two parts. The real signal part I (Inphase) is multiplied by a carrier without phase shift and the imaginary signal part Q (Quadrature) is multiplied by a phase shifted carrier. Thus signal x can be expressed in the form x = I + jQ, where I is the real signal part, Q is the imaginary signal part and j is an imaginary unit.

In mathematical form, the output signal y(n) of the FIR filter can be expressed as convolution as the sum of the product of the delayed signal and the weight coefficients:

$$y(n) = x * h = \sum_{k=1}^{N} h(k)x(n-k) \qquad\qquad (1)$$

where * denotes a convolution operation and n denotes the index of a signal element. Signals x and y and channel impulse response h can be processed as scalar, in vector form or in matrix form in a manner known *per* se.

A radio channel can be simulated in each channel simulator in a transformation space. The block diagram of such a channel simulator is shown in Figure 3. In this case, a signal 506 (x(n)) to be applied to simulation is transformed by convolution transformation into the transformation space in transformation means 500, thereby generating a transformed signal 508 (X). In weighting means 502, the transformed signal 508 (X) is weighted by a channel response H transformed by convolution transformation, generating a signal 510 (HX). The weighting can be carried out for instance by a multiplication operation. However, the multiplication *per se* can be implemented by one or more mathematical operations without actual multiplication to speed up the calculation. Finally, the input signal 510 (HX) is inversely transformed in inverse transformer means 504 into a time space, generating an output signal 512 (y(n)). The convolution transformation used in channel simulation may be for instance a Laplace, Z, Fourier transform or the like.

The division into sub-bands may cause interference and mismatching in the frequency range between the sub-bands. This can be seen when sub-bands are combined. Figure 4 shows the combination of sub-bands. The vertical axis shows band-specific amplification on a freely selected scale, and the horizontal axis shows the frequency. Curves 602 to 606 depict the sub-bands $\Delta B_1$ ... $\Delta B_M$ and curve 608 depicts the total band. Interference 610 on the combined total band appears in the range between the sub-bands. The magnitude of the interference depends on signal phasing in the different sub-bands. The problem may be alleviated by the use of an equalizer, which filters off any interference

between sub-bands $\Delta B_1 \ldots \Delta B_M$. For filtering interference, filtering methods, known *per* se, can be used to cut off high sudden deviations. Equalizing filtering can be performed before or after the sub-bands are combined (for example in Figure 1C in combiner 342).

Although the invention is described above with reference to the example according to the accompanying drawings, it is apparent that the invention is not limited thereto, but can be modified in a variety of ways within the scope of the inventive idea disclosed in the attached claims.

## Claims

1. A method of performing channel simulation on a radio frequency signal in wireless data transfer, **characterized by**:

   dividing the total band (10) reserved for the signal to be applied to channel simulation into at least two sub-bands (20);
   performing channel simulation on signals corresponding to each sub-band (20); and
   combining the signals (30) simulated in different sub-bands to form a total band signal (40) after channel simulation.

2. A method as claimed in claim 1, **characterized by** performing separate independent channel simulation on the signals corresponding to each sub-band (20).

3. A method as claimed in claim 1, **characterized by** using, in channel simulation, a different channel model for at least two signals corresponding to a different sub-band (20).

4. A method as claimed in claim 1, **characterized by** using, in channel simulation, the same channel model for at least two signals corresponding to a different sub-band (20).

5. A method as claimed in claim 1, **characterized by** performing channel simulation on a broadband signal, lowering the frequency of the broadband radio frequency signal before applying it to channel simulation and restoring the channel simulated signal to a radio frequency signal after channel simulation.

6. A method as claimed in claim 1, **characterized by** lowering the frequency of an analog radio frequency signal before applying it to channel simulation and restoring the channel simulated signal to a radio frequency signal after channel simulation; and

   transforming, after lowering the frequency, the analog radio frequency signal to digital and performing channel simulation digitally and transforming the channel simulated signal back to analog after channel simulation.

7. A method as claimed in claim 1, **characterized by** reducing the interference between the sub-bands by means of equalizing filtering when the signals (30) of the different sub-bands are combined.

8. A method as claimed in claim 1, **characterized by** performing the channel simulation with a FIR filter.

9. A method as claimed in claim 1, **characterized by** performing the channel simulation of each sub-band (20) in such a way that the signal to be applied to the channel simulation is transformed by convolution transformation into a transformation space, thus generating a transformed signal (508);

   weighting the transformed signal (508) by convolution transformation by a transformed channel response H, thus generating a weighted signal (510); and
   inversely transforming the weighted signal (510), thus generating a sub-band-specific channel simulated signal (512).

10. A channel simulator for performing channel simulation on a radio frequency signal used in wireless data transfer, **characterized in that** the channel simulator is arranged to divide the total band reserved for the signal to be applied to channel simulation into at least two sub-bands; and the channel simulator comprises

    at least two channel simulator units (116 to 120, 214 to 218, 322 to 326) for performing channel simulation on signals corresponding to each sub-band; and

a combiner (130, 228, 342) for combining the signals simulated in different sub-bands to form a total band signal after the channel simulation.

**11.** A channel simulator as claimed in claim 10, **characterized in that** the channel simulator units (116 to 120, 214 to 218, 322 to 326) are arranged to perform separate independent channel simulation on the signals corresponding to each sub-band.

**12.** A channel simulator as claimed in claim 10, **characterized in that** at least two different channel simulator units (116 to 120, 214 to 218, 322 to 326) are arranged to use, in channel simulation, a different channel model for at least two signals corresponding to a different sub-band (20).

**13.** A channel simulator as claimed in claim 10, **characterized in that** at least two different channel simulator units (116 to 120, 214 to 218, 322 to 326) are arranged to use, in channel simulation, the same channel model for at least two signals corresponding to a different sub-band (20).

**14.** A channel simulator as claimed in claim 10, **characterized in that** the channel simulator is arranged to simulate the behaviour of a broadband signal in a radio channel and the channel simulator comprises mixers (108 to 112, 202 to 206, 302 to 306) for lowering the frequency of a broadband radio frequency signal before the channel simulator units (116 to 120, 214 to 218, 322 to 326), and the channel simulator comprises mixers (122 to 126, 220 to 224, 334 to 338) for restoring the channel simulated signal to a radio frequency signal after the channel simulator units (116 to 120, 214 to 218, 322 to 326).

**15.** A channel simulator as claimed in claim 10, **characterized in that** the channel simulator comprises mixers (108 to 112, 202 to 206, 302 to 306) for lowering the frequency of an analog radio frequency signal before the channel simulator units (116 to 120, 214 to 218, 322 to 326), and the channel simulator comprises mixers (122 to 126, 220 to 224, 334 to 338) for restoring the channel simulated signal to a radio frequency signal after the channel simulator units (116 to 120, 214 to 218, 322 to 326); and

the channel simulator comprises A/D transformers (316 to 320) for transforming, after the mixers (108 to 112, 202 to 206, 302 to 306), the analog radio frequency signal to digital, and the channel simulators are arranged to perform channel simulation digitally, and the channel simulator comprises D/A transformers (328 to 332) for transforming the channel simulated signal back to analog after the channel simulator units (116 to 120, 214 to 218, 322 to 326).

**16.** A channel simulator as claimed in claim 10, **characterized in that** the mixer (130, 228, 342) is arranged to reduce the interference between the sub-bands by means of equalizing filtering.

**17.** A channel simulator as claimed in claim 10, **characterized in that** the channel simulator units (116 to 120, 214 to 218, 322 to 326) are implemented as FIR filters.

**18.** A channel simulator as claimed in claim 10, **characterized in that** at least one channel simulator unit (116 to 120, 214 to 218, 322 to 326) comprises

transformation means (500), in which the signal is transformed by convolution transformation into a transformation space for generating a transformed signal (508);
weighting means (502) for weighting the transformed signal (508) by convolution transformation for generating a signal (510) weighted by a transformed channel response H; and
inverse transformation means (504) for inversely transforming the input signal (510) into a time space for generating a sub-band-specific channel simulated signal (512).

**Patentansprüche**

**1.** Verfahren zur Durchführung einer Kanalsimulierung bei einem Funkfrequenzsignal für drahtlose Datenübertragung, **gekennzeichnet durch** Aufteilung des gesamten Bandes (10), das für das Signal zur Kanalsimulierung zur Verfügung steht, in wenigstens zwei Teilbänder (20); Durchführung der Kanalsimulierung für Signale, die jedem Teilband (20) entsprechen und Kombination der in verschiedenen Unterbändern simulierten Signale (30) zur Bildung eines Bandgesamtsignals (40) nach der Kanalsimulierung.

**2.** Verfahren nach Anspruch 1, **gekennzeichnet durch** die Durchführung einer separaten, unabhängigen Kanalsimulierung mit den Signalen, die jedem Teilband (20) entsprechen.

**3.** Verfahren nach Anspruch 1, **dadurch gekennzeichnet, daß** bei der Durchführung der Kanalsimulierung für wenigstens zwei Signale, die einem unterschiedlichem Teilband (20) entsprechen, ein anderes Kanalmodell benutzt wird.

**4.** Verfahren nach Anspruch 1, **dadurch gekennzeichnet, daß** bei der Kanalsimulierung für wenigstens zwei Signale, die einem unterschiedlichen Teilband (20) entsprechen, dasselbe Kanalmodell benutzt wird.

**5.** Verfahren nach Anspruch 1, **dadurch gekennzeichnet, daß** bei der Durchführung der Kanalsimulierung für ein Breitbandsignal die Frequenz des Breitbandfunkfrequenzsignal gesenkt wird, bevor das Signal für die Kanalsimulierung verwendet wird, und daß nach der Kanalsimulierung das kanalsimulierte Signal wieder in ein Funkfrequenzsignal verwandelt wird.

**6.** Verfahren nach Anspruch 1, **gekennzeichnet durch** Absenkung der Frequenz eines analogen Funkfrequenzsignals vor seiner Verwendung zur Kanalsimulierung und Rückführen des kanalsimulierten Signals zu einem Funkfrequenzsignal nach der Kanalsimulierung sowie Umformen des analogen Funkfrequenzsignals nach Absenkung der Frequenz zu einem digitalen Signal und Durchführen der Kanalsimulierung auf digitale Weise sowie Umformen des kanalsimulierten Signals zurück zu einem analogen Signal nach der Kanalsimulierung.

**7.** Verfahren nach Anspruch 1, **gekennzeichnet durch** Verringerung der Interferenz zwischen den Teilbändern **durch** Ausgleichsfilterung, sobald die Signale (30) unterschiedlicher Teilbänder kombiniert werden.

**8.** Verfahren nach Anspruch 1, **gekennzeichnet durch** Durchführung der Kanalsimulierung mit einem FIR-Filter.

**9.** Verfahren nach Anspruch 1, **gekennzeichnet durch** Durchführung der Kanalsimulierung jedes Unterbands (20) in der Weise, daß das Signal, das der Kanalsimulierung zugeführt wird, **durch** Windungstransformation in einen Transformationsraum übertragen wird, um auf diese Weise ein transformiertes Signal (508) zu erzeugen; ferner **gekennzeichnet durch** Bewerten des transformierten Signals (508) mit Hilfe einer transformierten Kanalempfindlichkeit H, um auf diese Weise ein bewertetes Signal (510) zu erzeugen; und inverses Transformieren des bewerteten Signals (510), um auf diese Weise ein spezifisches Teilbandkanal-simuliertes Signal (512) zu erzeugen.

**10.** Kanalsimulator zur Durchführung einer Kanalsimulation bei einem Funkfrequenzsignal, das bei der drahtlosen Datenübertragung benutzt wird, **dadurch gekennzeichnet, daß** der Kanalsimulator so angeordnet ist, daß das gesamte Band, das für das Signal zur Verfügung steht, welches der Kanalsimulierung zugeführt wird, in wenigstens zwei Teilbänder aufgeteilt wird, und daß der Kanalsimulator wenigstens zwei Kanalsimulatoreinheiten (116 - 120, 214 - 218, 322 - 326) zur Durchführung der Kanalsimulierung an Signalen aufweist, die jedem Teilband entsprechen, und mit einem Kombinator (130, 228, 242) zum Kombinieren der in unterschiedlichen Teilbändern simulierten Signale zur Bildung eines Gesamtbandsignals nach der Kanalsimulierung.

**11.** Kanalsimulator nach Anspruch 10, **dadurch gekennzeichnet, daß** die Kanalsimulatoreinheiten (116 - 120, 214 - 218, 322 - 326) so angeordnet sind, daß sie für die Signale, die jedem Teilband entsprechen, getrennte, unabhängige Kanalsimulierungen durchführen.

**12.** Kanalsimulator nach Anspruch 10, **dadurch gekennzeichnet, daß** wenigstens zwei verschiedene Kanalsimulatoreinheiten (116 - 120, 214 - 218, 322 - 326) angeordnet sind, um bei der Kanalsimulierung ein anderes Kanalmodell für wenigstens zwei Signale zu verwenden, entsprechend einem anderen Teilband (20).

**13.** Kanalsimulator nach Anspruch 10, **dadurch gekennzeichnet, daß** wenigstens zwei verschiedene Kanalsimulatoreinheiten (116 - 120, 214 - 218, 322 - 326) angeordnet sind, um bei der Kanalsimulierung dasselbe Kanalmodell für wenigstens zwei Signale zu verwenden, entsprechend einem anderen Teilband (20).

**14.** Kanalsimulator nach Anspruch 10, **dadurch gekennzeichnet, daß** der Kanalsimulator vorgesehen ist, um das Verhalten eines Breitbandsignals in einem Funkkanal zu simulieren und daß der Kanalsimulator Mischer (108 - 112, 202 - 206, 302 - 306) zur Absenkung der Frequenz eines Breitbandfunkfrequenzsignals vor den Kanalsimulatoreinheiten (116 - 120, 214 - 218, 322 - 326) aufweist und der Kanalsimulator darüber hinaus mit Mischern (122 - 126, 220 - 224, 334 - 338) versehen ist, um das kanalsimulierte Signal zu einem Radiofrequenzsignal nach den Kanalsimulatoreinheiten (116 - 120, 214 - 218, 322 - 326) zurückzuführen.

15. Kanalsimulator nach Anspruch 10, **dadurch gekennzeichnet, daß** der Kanalsimulator Mischer (108 - 112, 202 - 206, 302 - 306) zur Absenkung der Frequenz eines analogen Funkfrequenzsignals vor den Kanalsimulatoreinheiten (116 - 120, 214 - 218, 322 - 326) aufweist, und daß der Kanalsimulator mit Mischern (122 - 126, 220 - 224, 334 - 338) zur Rückführung des kanalsimulierten Signal auf ein Funkfrequenzsignal nach den Kanalsimulatoreinheiten (116 - 120, 214 - 218, 322 - 326) versehen ist, wobei der Kanalsimulator darüber hinaus Wechselstrom- / Gleichstrom-Transformatoren (316 - 320) zur Transfomierung nach den Mischern (108 - 112, 202 - 206, 302 - 306) des analogen Funkfrequenzsignals zu digital besitzt, und die Kanalsimulatoren vorgesehen sind, um die Kanalsimulierung digital durchzuführen, und wobei der Kanalsimulator Gleichstrom- / Wechselstrom-Transformatoren (328 - 332) zur Rückumformung des kanalsimulierten Signals auf analog nach den Kanalsimulatoreinheiten (116 - 120, 214 - 218, 322 - 326) hat.

16. Kanalsimulator nach Anspruch 10, **dadurch gekennzeichnet, daß** der Mischer (130, 228, 342) vorgesehen ist, um die Interferenz zwischen den Teilbändern durch Ausgleichsfiltrierung zu verringern.

17. Kanalsimulator nach Anspruch 10, **dadurch gekennzeichnet, daß** die Kanalsimulatoreinheiten (116 - 120, 214 - 218, 322 - 326) als FIR-Filter ausgeführt sind.

18. Kanalsimulator nach Anspruch 10, **dadurch gekennzeichnet, daß** wenigstens eine Kanalsimulatoreinheit (116 - 120, 214 - 218, 322 - 326) folgende Elemente aufweist: eine Umformungseinrichtung (500), in der das Signal durch Windungstransformation in einen Transformationsraum zur Erzeugung eines transformierten Signals (508) umgewandelt wird; eine Bewertungseinrichtung (502) zur Bewertung des transformierten Signals (508) durch Windungstransformation zwecks Erzeugung eines Signals (510), das durch eine transformierte Kanalreaktion H bewertet wird; und eine inverse Transformationseinrichtung (504) zur inversen Transformierung des Eingangssignals (510) in einen Zeitraum zwecks Erzeugung eines simulierten speziellen Teilbandkanalsignals (512).

**Revendications**

1. Procédé pour effectuer une simulation de canal sur un signal de fréquence radio dans un transfert de données sans fil, **caractérisé par** :

la division de la bande totale (10) réservée pour le signal à appliquer à une simulation de canal en au moins deux sous-bandes (20) ;
l'exécution d'une simulation de canal sur des signaux correspondant à chaque sous-bande (20) ; et
la combinaison des signaux (30) simulés dans des sous-bandes différentes pour former un signal de bande totale (40) après simulation de canal.

2. Procédé selon la revendication 1, **caractérisé par** l'exécution d'une simulation de canal indépendante distincte sur les signaux correspondant à chaque sous-bande (20).

3. Procédé selon la revendication 1, **caractérisé par** l'utilisation, dans une simulation de canal, d'un modèle de canal différent pour au moins deux signaux correspondant à une sous-bande différente (20).

4. Procédé selon la revendication 1, **caractérisé par** l'utilisation, dans une simulation de canal, du même modèle de canal pour au moins deux signaux correspondant à une sous-bande différente (20).

5. Procédé selon la revendication 1, **caractérisé par** l'exécution d'une simulation de canal sur un signal à large bande, l'abaissement de la fréquence du signal de fréquence radio à large bande avant de l'appliquer à la simulation de canal et le rétablissement du signal de canal simulé en un signal de fréquence radio après simulation de canal.

6. Procédé selon la revendication 1, **caractérisé par** l'abaissement de la fréquence d'un signal de fréquence radio analogique avant de l'appliquer à la simulation de canal et le rétablissement du signal de canal simulé en un signal de fréquence radio après simulation de canal ; et

la transformation, après abaissement de la fréquence, du signal de fréquence radio analogique en numérique et l'exécution numérique de la simulation de canal et la transformation en retour du signal de canal simulé en analogique après simulation de canal.

7. Procédé selon la revendication 1, **caractérisé par** la diminution de l'interférence entre les sous-bandes au moyen d'un filtrage d'égalisation lorsque les signaux (30) des différentes sous-bandes sont combinés.

8. Procédé selon la revendication 1, **caractérisé par** l'exécution de la simulation de canal avec un filtre FIR.

9. Procédé selon la revendication 1, **caractérisé par** l'exécution de la simulation de canal de chaque sous-bande (20) de telle façon que le signal à appliquer à la simulation de canal est transformé par une transformation de convolution dans un espace de transformation, générant ainsi un signal transformé (508) ;

la pondération du signal transformé (508) par transformation de convolution par une réponse de canal transformée H, générant ainsi un signal pondéré (510) ; et
la transformation inverse du signal pondéré (510), générant ainsi un signal simulé de canal spécifique à une sous-bande (512).

10. Simulateur de canal pour effectuer une simulation de canal sur un signal de fréquence radio, utilisée dans un transfert de données sans fil, **caractérisé en ce que** le simulateur de canal est agencé de manière à diviser la bande totale réservée pour le signal à appliquer à une simulation de canal en au moins deux sous-bandes ; et le simulateur de canal comprend

au moins deux unités de simulateur de canal (116 à 120, 214 à 218, 322 à 326) pour effectuer une simulation de canal sur des signaux correspondant à chaque sous-bande ; et
un combineur (130, 228, 342) pour combiner les signaux simulés dans des sous-bandes différentes pour former un signal de bande totale après la simulation de canal.

11. Simulateur de canal selon la revendication 10, **caractérisé en ce que** les unités de simulateur de canal (116 à 120, 214 à 218, 322 à 326) sont agencées de manière à effectuer une simulation de canal indépendante distincte sur les signaux correspondant à chaque sous-bande.

12. Simulateur de canal selon la revendication 10, **caractérisé en ce qu'**au moins deux unités de simulateur de canal différentes (116 à 120, 214 à 218, 322 à 326) sont agencées de manière à utiliser, dans une simulation de canal, un modèle de canal différent pour au moins deux signaux correspondant à une sous-bande (20) différente.

13. Simulateur de canal selon la revendication 10, **caractérisé en ce qu'**au moins deux unités de simulateur de canal différentes (116 à 120, 214 à 218, 322 à 326) sont agencées de manière à utiliser, dans une simulation de canal, le même modèle de canal pour au moins deux signaux correspondant à une sous-bande (20) différente.

14. Simulateur de canal selon la revendication 10, **caractérisé en ce que** le simulateur de canal est agencé de manière à simuler le comportement d'un signal à large bande dans un canal radio et le simulateur de canal comprend des mélangeurs (108 à 112, 202 à 206, 302 à 306) pour abaisser la fréquence d'un signal de fréquence radio à large bande avant les unités de simulateur de canal (116 à 120, 214 à 218, 322 à 326) et le simulateur de canal comprend des mélangeurs (122 à 126, 220 à 224, 334 à 338) pour rétablir le signal de canal simulé en un signal de fréquence radio après les unités de simulateur de canal (116 à 120, 214 à 218, 322 à 326).

15. Simulateur de canal selon la revendication 10, **caractérisé en ce que** le simulateur de canal comprend des mélangeurs (108 à 112, 202 à 206, 302 à 306) pour abaisser la fréquence d'un signal de fréquence radio analogique avant les unités de simulateur de canal (116 à 120, 214 à 218, 322 à 326) et le simulateur de canal comprend des mélangeurs (122 à 126, 220 à 224, 334 à 338) pour rétablir le signal de canal simulé en un signal de fréquence radio après les unités de simulateur de canal (116 à 120, 214 à 218, 322 à 326) ; et

le simulateur de canal comprend des transformateurs A/N (316 à 320) pour transformers, après les mélangeurs (108 à 112, 202 à 206, 302 à 306), le signal de fréquence radio analogique en numérique, et les simulateurs de canal sont agencés pour effectuer numériquement une simulation de canal, et le simulateur de canal comprend des transformateurs N/A (328 à 332) pour transformer en retour le signal de canal simulé en analogique après les unités de simulateur de canal (116 à 120, 214 à 218, 322 à 326).

16. Simulateur de canal selon la revendication 10, **caractérisé en ce que** le mélangeur (130, 228, 342) est agencé pour diminuer l'interférence entre les sous-bandes au moyen d'un filtrage d'égalisation.

**17.** Simulateur de canal selon la revendication 10, **caractérisé en ce que** les unités de simulateur de canal (116 à 120, 214 à 218, 322 à 326) sont mises en oeuvre sous la forme de filtres FIR.

**18.** Simulateur de canal selon la revendication 10, **caractérisé en ce qu'**au moins une unité de simulateur de canal (116 à 120, 214 à 218, 322 à 326) comprend

un moyen de transformation (500) dans lequel le signal est transformé par une transformation de convolution dans un espace de transformation pour générer un signal transformé (508) ;
un moyen de pondération (502) pour pondérer le signal transformé (508) par transformation de convolution pour générer un signal (510) pondérée par une réponse de canal transformée H ; et
un moyen de transformation inverse (504) pour effectuer une transformation inverse du signal d'entrée (510) dans un espace temporel pour générer un signal simulé de canal spécifique à une sous-bande (512).

FIG. 1A

FIG. 1B

FIG. 1C

FIG. 2

FIG. 3

FIG. 4

**EP 1 371 160 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5191594 A
- EP 1075093 A